# FASCICULE DE BREVET EUROPEEN

(11) **EP 1 643 168 B1**
(45) Date de publication et mention de la délivrance du brevet: **11.04.2007**
(21) Numéro de dépôt: 05291944.6
(22) Date de dépôt: 20.09.2005
(51) Int. Cl.: F16H 63/30

(54) **Dispositif de commande d'une boîte de vitesses pour véhicules automobiles**
Getriebesteuerungseinrichtung für Kraftahrzeuge
Control device of a transmission for vehicles

(30) Priorité: 28.09.2004 FR 0410256
(43) Date de publication de la demande: 05.04.2006
(73) Titulaire: PEUGEOT CITROËN AUTOMOBILES S.A., 78140 Velizy Villacoublay (FR)
(72) Inventeur: Ploe, Pierre, 92800 Puteaux (FR)
(74) Mandataire: Thinat, Michel

(56) Documents cités:
- EP-A- 1 271 014
- FR-A- 2 541 948
- US-A- 4 307 624

## Description

La présente invention concerne un dispositif de commande d'une boîte de vitesses pour véhicule automobile, tel que connu de EP 1 127 014, divulguant toutes les caractéristiques du préambule de la revendication 1.

Les boîtes de vitesses actuelles peuvent utiliser des architectures de marche arrière utilisant un pignon baladeur de marche arrière pouvant, par translation, s'intercaler entre des pignons solidaires des arbres primaire et secondaire montés parallèlement l'un par rapport à l'autre dans un carter de la boîte de vitesses et ce afin d'inverser le mouvement en sortie de la boîte de vitesses.

Certaines boîtes de vitesses utilisent une architecture de marche arrière particulière par le fait que le pignon récepteur de marche arrière est supporté par le manchon du synchroniseur double de passage du premier ou du second rapport de vitesse de marche avant du véhicule.

Une telle architecture a pour avantage d'être peu encombrante en direction longitudinale de la boîte de vitesses. Par contre, le maintien de la position axiale du manchon de synchroniseur est réalisé par la fourchette de passage du premier ou du second rapport de marche avant, le manchon étant bloqué dans cette fourchette. Cette dernière doit donc être maintenue axialement par un moyen mécanique.

Afin de garantir le maintien en position du pignon baladeur de marche arrière lorsque ce dernier est engagé, il est nécessaire de concevoir une denture de ce pignon ayant un léger angle d'appui appelé "angle de détalonnage". Cet angle permet de maintenir le pignon baladeur en appui contre sa butée constituée par le carter de la boîte de vitesses lorsque cette dernière est sous couple et de maintenir également un contact avec le manchon de synchronisation du premier et du second rapport de marche avant. Cependant, à la manière d'une denture hélicoïdale, cet angle de détalonnage applique un effort de translation à ce manchon de synchronisation vers le pignon du second rapport de marche avant.

Le dispositif de maintien de la fourchette d'engagement du premier et du second rapport de marche avant entre les pignons correspondants de première et de seconde, au point mort du levier de changement de vitesse, est réalisé par un système d'interverrouillage du type hémicylindrique utilisant deux portions de cylindre venant en correspondance d'un autre cylindre sensiblement équivalent supporté par le doigt de passage de vitesse. Ce doigt supporte également des fenêtres libérant l'interverrouillage lorsque la fourchette doit être engagée.

Ce dispositif connu a l'avantage d'être simple et d'assurer un blocage en translation de la fourchette tant que les fenêtres susmentionnées ne sont pas positionnées en face de la fourchette.

Par contre, ce dispositif d'interverrouillage a pour inconvénient de nécessiter de nombreux jeux de fonctionnement du fait que les différents éléments cylindriques de verrouillage sont supportés par des éléments non liés, à savoir la fourchette d'un côté et le doigt de passage de vitesse de l'autre côté. En effet, le nombre de cotes définissant ce dispositif d'interverrouillage est important et la dispersion de fabrication entraîne un jeu axial entre la fourchette et le doigt de passage de vitesse.

En outre, la fourchette de passage du premier et du second rapport de vitesse de marche avant bascule autour de son axe et son arrêt en rotation s'effectue par le contact des patins de fourchette au fond du manchon de synchronisation correspondant, de sorte qu'il est nécessaire d'ajouter des dispersions fonctionnelles supplémentaires allant dans un sens d'augmentation des jeux de fonctionnement. Enfin, l'effort transmis par le manchon à la fourchette peut faire fléchir cette dernière axialement et également en rotation.

Ce dispositif connu ne permet donc pas un maintien axial suffisamment précis de la fourchette de passage du premier et du second rapport de vitesse pour l'architecture de marche arrière décrite précédemment. En conséquence, le manchon de synchronisation du premier et du second rapport de marche avant peut se déplacer et entrer en phase de synchronisation du second rapport de vitesse. L'action simultanée de l'engagement de la marche arrière et la synchronisation en marche avant du véhicule (second rapport) exerce des contraintes non cohérentes et use prématurément le dispositif de synchronisation du second rapport de marche avant.

La présente invention a pour but d'éliminer les inconvénients ci-dessus en proposant un dispositif permettant de bloquer précisément en translation la fourchette de passage du premier et du second rapport de marche avant du véhicule uniquement lorsque le rapport de marche arrière est engagé, ce dispositif étant inactif pour tous les autres rapports de marche avant.

A cet effet, l'invention concerne un dispositif de commande d'une boîte de vitesses pour véhicule automobile, du type comprenant des moyens de commande permettant d'engager la marche arrière du véhicule et un premier synchroniseur associé à l'un des rapports de marche avant de la boîte de vitesses, notamment le premier rapport de marche avant, le synchroniseur comprenant un manchon de commande coopérant avec une fourchette afin de le déplacer à une position de verrouillage à laquelle le premier rapport de marche avant est engagé, et qui est caractérisé en ce que la fourchette d'engagement du premier rapport de marche avant est bloquée à une position inactive de point mort du manchon de commande par une pièce mobile lors de l'opération d'engagement de la marche arrière du véhicule.

Les moyens de commande d'engagement de la marche arrière comprennent un basculeur pivotant dont une extrémité forme une noix coopérant avec un doigt de commande pour faire pivoter l'extrémité opposée du basculeur pourvue d'une fourchette d'engagement de la marche arrière, le basculeur pivotant étant pourvu d'un bras faisant partie de moyens de freinage des pignons de rapport de marche arrière coopérant avec des éléments d'actionnement d'un autre synchroniseur associé notamment à l'un des rapports de marche avant le plus élevé de la boîte de vitesses et le basculeur constitue la pièce mobile de blocage de la fourchette d'engagement du premier rapport de marche avant, le basculeur pivotant comprenant une encoche dans laquelle s'engage une patte solidaire de la noix de fourchette d'engagement du premier rapport de marche avant lorsque le rapport de marche arrière est engagé, de manière à bloquer axialement cette fourchette.

L'encoche est réalisée dans le bras du basculeur pivotant à l'opposé de son axe de pivotement relativement au carter de la boîte de vitesses.

Le premier synchroniseur est un synchroniseur double de passage sélectif du premier et du second rapport de marche avant.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en coupe longitudinale d'une boîte de vitesses pour véhicule automobile à laquelle s'applique l'invention ;
- la figure 2 est une vue en perspective de la commande interne de la boîte de vitesses en position de point mort et comportant les moyens de l'invention permettant de bloquer en position axiale la fourchette de passage des premier et second rapports de marche avant lors de l'engagement de la marche arrière du véhicule ; et
- la figure 3 est la vue en perspective de la figure 2 et représentant les moyens à leur position de blocage de la fourchette de passage des premier et second rapports de marche avant en position engagée de la marche arrière.

En se reportant aux figures, la référence 1 désigne le carter ou boîtier d'une boîte de vitesses pour véhicule automobile comprenant un arbre primaire 2 relié à la sortie d'un embrayage, non représenté, dont l'entrée est reliée à un moteur à combustion interne, également non représenté, et un arbre secondaire ou de sortie 3 monté parallèlement à l'arbre primaire dans le carter 1 de la boîte de vitesses.

L'arbre secondaire 3 est relié aux roues motrices du véhicule par des moyens comprenant notamment un différentiel, non représenté.

Les arbres primaire 2 et secondaire 3 comportent plusieurs paires de pignons en prise permettant le passage d'un nombre correspondant de rapports de transmission de marche avant par des synchroniseurs.

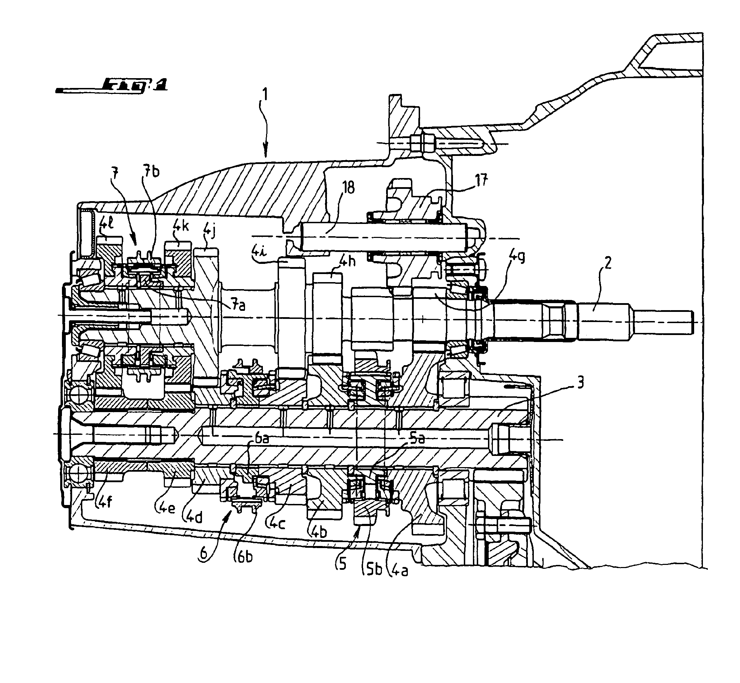

Comme représenté en figure 1, la boîte de vitesses comprend six rapports de marche avant et un rapport de marche arrière.

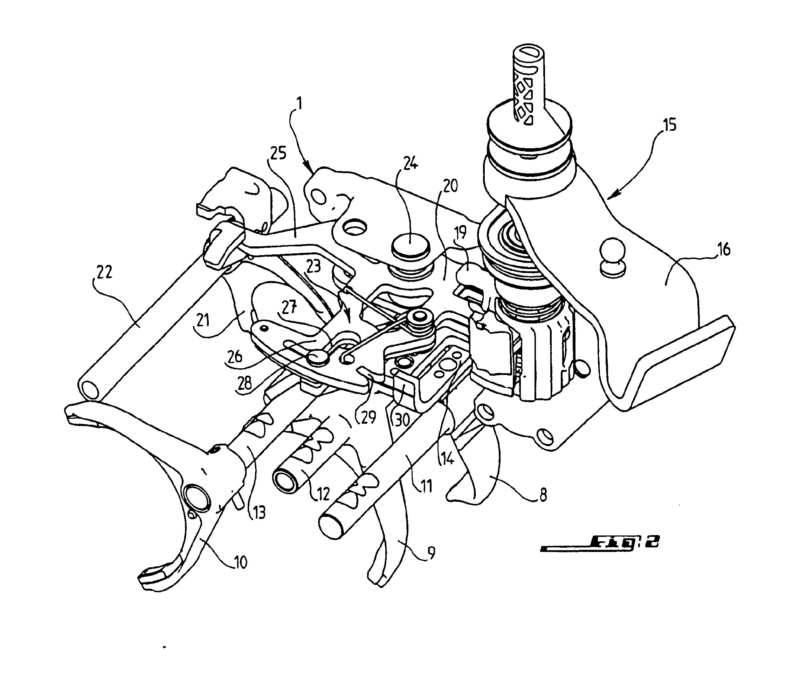

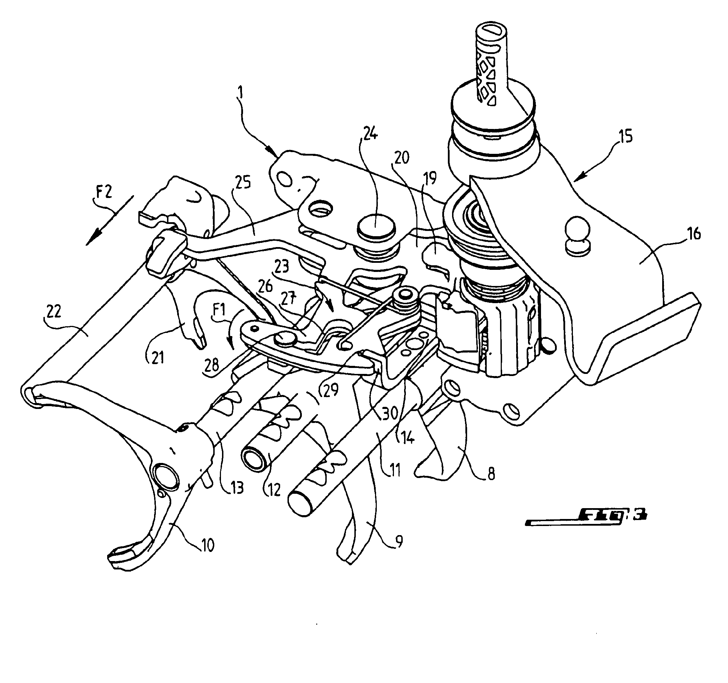

Ainsi, la boîte de vitesses comprend six pignons 4a à 4f portés par l'arbre secondaire 3 en engrènement respectivement avec les pignons 4g à 41 portés par l'arbre primaire 2 pour définir respectivement les premier, second, troisième, quatrième, cinquième et rapport de marche avant. L'arbre secondaire 3 est pourvu d'un synchroniseur double 5 interposé entre les pignons 4a, 4b de premier et second rapports de marche avant pour solidariser sélectivement l'un ou l'autre de ces deux pignons à l'arbre secondaire 3. Un second synchroniseur double 6 est également porté par l'arbre secondaire 3 et interposé entre les pignons 4c et 4d des troisième et quatrième rapports de marche avant pour solidariser sélectivement l'un ou l'autre de ces deux pignons à l'arbre secondaire 3. Un troisième synchroniseur double 7 est porté par l'arbre primaire 2 et interposé entre les pignons 4k et 4l des cinquième et sixième rapports de marche avant pour sélectivement solidariser l'un ou l'autre de ces deux pignons à l'arbre primaire 2. Chaque synchroniseur 5, 6, 7 comporte, de façon classique, un moyeu 5a, 6a, 7a solidaire de l'arbre correspondant 3, 2 et un manchon de commande 5b, 6b, 7b monté axialement coulissant sur le moyeu correspondant 5a, 6a, 7a. Chaque manchon de commande 5b, 6b, 7b est déplaçable par une fourchette 8, 9, 10 entre une position inactive et active de verrouillage de l'un ou l'autre des deux pignons correspondants à l'arbre secondaire ou primaire 2, 3 suivant le sens de déplacement de la fourchette. Chaque fourchette 8 d'engagement du premier ou du second rapport de marche avant, 9 d'engagement du troisième ou du quatrième rapport de marche avant et 10 d'engagement du cinquième ou sixième rapport de marche avant, est portée par un axe de commande 11, 12, 13 parallèle aux arbres primaire et secondaire 2, 3 et monté coulissant axialement dans le carter 1 de la boîte de vitesses. En outre, une crosse ou noix, seule la noix 14 des premier et second rapports de marche avant étant clairement visible aux figures 2, 3, est solidaire en translation de chaque axe de commande 11, 12, 13 et coopère, lors de l'engagement du rapport de marche avant correspondant, avec un doigt de commande, non représenté, d'un module 15 de sélection et de passage d'un rapport de marche avant ou de marche arrière.

Le module 15 comprend un levier de commande 16 monté pivotant dans le carter 1 et déplaçable de part et d'autre d'une position de point mort représentée en figure 2 vers une position d'un rapport choisi de marche avant ou vers une position de marche arrière.

Un pignon baladeur de marche arrière 17 est porté par un arbre de renvoi 18 parallèle aux arbres primaire et secondaire 2, 3. Le pignon baladeur 17 est déplaçable entre une position inactive de libération et une position de couplage avec un pignon de marche arrière pour inverser le sens de rotation du pignon de marche avant 4a afin d'entraîner le véhicule en marche arrière.

Les moyens de déplacement du pignon baladeur 17 comprennent le levier 16 du module 15 comportant un doigt de commande 19 destiné à coopérer, lors de l'engagement de la marche arrière, avec une noix ou crosse 20 de manière à déplacer une fourchette 21 portée par un axe de commande 22 parallèle aux arbres primaire et secondaire 2, 3 et monté coulissant axialement dans le carter 1 de la boîte de vitesses.

La noix 20 forme une extrémité d'un basculeur 23 de commande de marche arrière monté pivotant dans le carter 1 autour d'un axe fixe 24 s'étendant perpendiculairement aux axes de commande 11, 12, 13, 22. Le basculeur pivotant 23 comporte un bras 25 opposé à la noix 20 et coopérant avec l'axe 22 pour déplacer le pignon baladeur 17 entre ses positions active et inactive.

En plus de sa fonction de commande de marche arrière, le basculeur 23 fait partie de moyen de freinage de marche arrière décrits en détail notamment dans la demande de brevet français N° 2 728 041, dont la description est incorporée dans la présente demande. A cet effet, le basculeur 23 comporte un bras 26, opposé à l'axe de pivotement 24, et à guide 27 dans lequel est reçu un doigt de commande 28 lié en translation à l'axe coulissant 13 de commande de passage du cinquième rapport de marche avant de la boîte de vitesses, le guide 27 à came escamotable permettant d'entraîner la fourchette 10 d'engagement du cinquième rapport de marche avant pour freiner en rotation l'arbre primaire 2 par l'intermédiaire du synchroniseur 7 associé à la fourchette 10.

Selon l'invention, le bras 26 du basculeur 23 comporte à l'une de ses extrémités une encoche latérale 29 s'étendant sensiblement perpendiculairement aux axes de commande 11-13 au-dessus de ceux-ci et s'ouvrant vers la noix 14 du premier rapport de marche avant qui comporte une patte 30 s'étendant perpendiculairement de la noix 14 et de l'axe de commande 11 au-dessus de ce dernier. Lorsque le rapport de marche arrière est engagé, le doigt de passage 19 entraîne en rotation le basculeur 23 autour de l'axe 24 comme indiqué par la flèche F1, ce qui entraîne en translation le pignon baladeur de marche arrière 17 par l'intermédiaire de la fourchette 21 comme indiqué par la flèche F2. En même temps, le basculeur 23 à guide 27 entraîne la fourchette 10 du cinquième rapport de marche avant de façon à freiner en rotation l'arbre primaire 2 par l'intermédiaire du synchroniseur 7 et l'encoche 29 du basculeur 23 s'engage de part et d'autre de la patte 30 s'étendant perpendiculairement au plan du basculeur 23, de manière à bloquer en translation la noix 14 et la fourchette 8 des premier et second rapports de marche avant et, par conséquent le manchon 5b du synchroniseur 5.

Les moyens de blocage en position axiale de la fourchette de passage des premier et second rapports de marche avant lorsque la marche arrière est engagée sont d'une structure extrêmement simple et diminuent significativement les jeux fonctionnels de verrouillage en translation de cette fourchette puisqu'il suffit de prévoir une encoche 29 d'une largeur légèrement supérieure à l'épaisseur de la patte 30 s'engageant dans l'encoche 29 en position basculée du basculeur 23 représentée en figure 3. Ces moyens de blocage peuvent s'adapter à des boîtes de vitesses actuelles sans modifications substantielles.

## Revendications

1. Dispositif de commande d'une boîte de vitesses pour véhicule automobile, du type comprenant des moyens de commande permettant d'engager la marche arrière du véhicule et un premier synchroniseur (5) associé à l'un des rapports de marche avant de la boîte de vitesses, notamment le premier rapport de marche avant, le synchroniseur (5) comprenant un manchon de commande (5b) coopérant avec une fourchette (8) afin de le déplacer à une position de verrouillage à laquelle le premier rapport de marche avant est engagé, **caractérisé en ce que** la fourchette (8) d'engagement du premier rapport de marche avant est bloquée à une position inactive de point mort du manchon de commande (5b) par une pièce (23) mobile lors de l'opération d'engagement de la marche arrière du véhicule et **en ce que** les moyens de commande d'engagement de la marche arrière comprennent un basculeur pivotant (23) dont une extrémité (20) forme une noix coopérant avec un doigt de commande (19) pour faire pivoter l'extrémité opposée (25) du basculeur (23) pourvue d'une fourchette (21) d'engagement de la marche arrière, le basculeur pivotant (23) étant pourvu d'un bras (26) faisant partie de moyens de freinage des pignons de rapport de marche arrière coopérant avec des éléments d'actionnement d'un autre synchroniseur (7) associé notamment à l'un des rapports de marche avant le plus élevé de la boîte de vitesses et **en ce que** le basculeur pivotant (23) constitue la pièce mobile de blocage de la fourchette (8) d'engagement du premier rapport de marche avant.

2. Dispositif selon la revendication 1, **caractérisé en ce que** le basculeur pivotant (23) comprend une encoche (29) qui s'engage sur une patte (30) solidaire de la noix (14) de la fourchette (8) d'engagement du premier et second rapport de marche avant lorsque le rapport de marche arrière est engagé de manière à bloquer axialement cette fourchette.

3. Dispositif selon la revendication 2, **caractérisé en ce que** l'encoche (29) est réalisée dans le bras (26) du basculeur pivotant (23) à l'opposé de son axe de pivotement (24) relativement au boîtier (1) de la boîte de vitesses.

4. Dispositif selon l'une des revendications précédentes, **caractérisé en ce que** le premier synchroniseur (5) est un synchroniseur double de passage sélectif du premier et du second rapport de marche avant.

## Claims

1. Control device of a transmission for vehicles, of the type including shifting means making it possible to engage the reverse gear of the vehicle and a first synchronizing device (5) associated with one of the forward gear ratios of the transmission, in particular the first forward gear ratio, the synchronizing device (5) comprising a control sleeve (5b) cooperating with a shift fork (8) in order to move it to a locking positioning in which the first forward gear ratio is engaged, **characterized in that** the shift fork (8) for engaging the first forward gear ratio is blocked in an inactive neutral position of the control sleeve (5b) by a piece (23) that can be moved during the operation of engaging the reverse gear of the vehicle and **in that** the shifting means to engage the reverse gear comprise a pivoting base (23), one end (20) of which forms a joint cooperating with a shift finger (19) to cause to pivot the opposite end (25) of the base (23) equipped with a fork (21) for engaging the reverse gear, the pivoting base (23) being equipped with an arm (26) constituting part of the means for braking the reverse gear ratio sprockets cooperating with actuating elements of another synchronizing device (7) associated in particular with one of the highest forward gear ratios of the transmission and **in that** the pivoting base (23) constitutes the mobile piece for blocking the fork (8) for engaging the first forward gear ratio.

2. Device according to claim 1, **characterized in that** the pivoting base (23) comprises a notch (29) which is engaged on a foot (30) forming one piece with the joint (14) of the fork (8) for engaging the first and second forward gear ratios when the reverse gear ratio is engaged in such a way as to axially block this fork.

3. Device according to claim 2, **characterized in that** the notch (29) is made in the arm (26) of the pivoting base (23) opposite its pivotal axis (24) relative to the transmission (1).

4. Device according to one of the preceding claims, **characterized in that** the first synchronizing device (5) is a dual synchronizing device for selective passage from the first and second forward gear ratios.

## Patentansprüche

1. Getriebesteuerungseinrichtung für Kraftfahrzeuge eines Typs, der Steuermittel umfasst, um den Rückwärtsgang des Fahrzeugs einzulegen und eine erste Synchronisierungskupplungsnabe (5), die mit einem der Vorwärtsgänge des Getriebes verbunden ist, vor allem mit dem ersten Vorwärtsgang, wobei die Synchronisierungskupplungsnabe (5) eine mit einem Bügel (8) zusammenwirkende Steuermuffe (5b) umfasst, um sie in eine Verriegelungsstellung zu verschieben, in der der erste Vorwärtsgang eingelegt ist, **dadurch gekennzeichnet, dass** der Bügel (8) zum Einlegen des ersten Vorwärtsgangs in einer inaktiven Totpunktstellung der Steuermuffe (5b) von einem beweglichen Teil (23) während des Vorgangs des Einlegens des Rückwärtsgangs blockiert wird und **dadurch**, dass die Steuermittel zum Einlegen des Rückwärtsgangs ein Schwenkkippglied (23) umfassen, von dem ein Ende (20) eine Nuss ausbildet, die mit einem Steuerfinger (19) zusammenwirkt, um das gegenüberliegende Ende (25) des Kippgliedes (23), das mit einem Bügel (21) zum Einlegen des Rückwärtsgangs ausgestattet ist, zu schwenken, wobei das Schwenkkippglied (23) mit einem Arm (26) ausgestattet ist, der Teil der Bremsmittel der Ritzel des Rückwärtsgangs ist und mit den Antriebsmitteln einer anderen Synchronisierungskupplungsnabe (7) zusammenwirkt, die vor allem mit einem der höchsten Vorwärtsgänge des Getriebes verbunden ist, und **dadurch**, dass das Schwenkkippglied (23) das bewegliche Teil der Blockierung des Bügels (8) zum Einlegen des ersten Vorwärtsgangs ist.

2. Einrichtung nach Anspruch 1, **dadurch gekennzeichnet, dass** das Schwenkkippglied (23) eine Kerbe (29) umfasst, die auf einer mit der Nuss (14) des Bügels (8) zum Einlegen des ersten und des zweiten Vorwärtsganges verbundenen Klaue (30) einrastet, wenn der Rückwärtsgang eingelegt wird, um diesen Bügel axial zu blockieren.

3. Einrichtung nach Anspruch 2, **dadurch gekennzeichnet, dass** die Kerbe (29) in den Arm (26) des Schwenkkippglieds (23) in bezug zum Gehäuse (1) des Getriebes gegenüber seiner Schwenkachse (24) eingearbeitet ist.

4. Einrichtung nach einem der vorangehenden Ansprüche, **dadurch gekennzeichnet, dass** die erste Synchronisierungskupplungsnabe (5) eine doppelte Synchronisierungskupplungsnabe zum selektiven Übergang vom ersten in den zweiten Vorwärtsgang ist.
